# EUROPEAN PATENT APPLICATION

(11) **EP 1 653 211 A1**
(43) Date of publication of application: **03.05.2006**
(21) Application number: 04425817.6
(22) Date of filing: 02.11.2004
(51) Int. Cl.: G01M 17/007

(54) **Roller test bench for motor vehicles**

(71) Applicant: Sacimex S.r.l., 10121 Torino (IT); Control Sistem S.r.l., 10121 Torino (IT)
(72) Inventor: Borello, Gianluigi, 10121 Torino (IT)
(74) Representative: Marchitelli, Mauro

(57) **Abstract**

A roller test bench for vehicles on wheels, comprising at least one support roller (20) whereon acts a respective wheel (22) of a vehicle, comprising a flexible element closed in a loop (24) co-operating with the support roller (20) and with transmission members (26,28). The flexible element (24) has a lower segment wound on the support roller (20) and an upper segment (30) that is planar, which in use is positioned between a wheel (22) of the vehicle being tested and the support roller (20).

## Description

The present invention relates to a roller test bench for wheel vehicles such as motorcycles, motor vehicles, etc..

Roller test benches normally used for tests of vehicles are constituted by one or more steel rollers rotating around a horizontal axis and connected to a brake. The diameter of the rollers varies from two to three times the diameter of tyre of the vehicle being tested. The tyre bears on a respective roller at an upper generatrix thereof. A smaller diameter of the roller causes excessive deformation of the tyre and does not allow to have a contact surface between tyre and roller such as to transmit all the power of the vehicle engine without rapidly damaging the tyre. The large diameter of the rollers implies the installation of the test bench in a pit with a depth of 3 to 4 meters, with consequent safety problems (possible accumulation of toxic or explosive gases) and high installation costs.

The object of the present invention is to provide a roller test bench which allows to overcome the aforesaid drawbacks.

According to the present invention, said object is achieved by a roller test bench having the characteristics set out in the claims.

The characteristics and the advantages of the test bench according to the present invention shall become readily apparent in the detailed description that follows, provided purely by way of non limiting example, with reference to the accompanying drawings in which:
- Figure 1 is a schematic lateral view of a roller test bench according to the present invention,
- Figure 2 is a plan view of the roller test bench of Figure 1,
- Figure 3 is a front elevation view according to the arrow III of Figure 1, and
- Figure 4 is a schematic, enlarged scale section according to the arrow IV-IV of Figure 1.

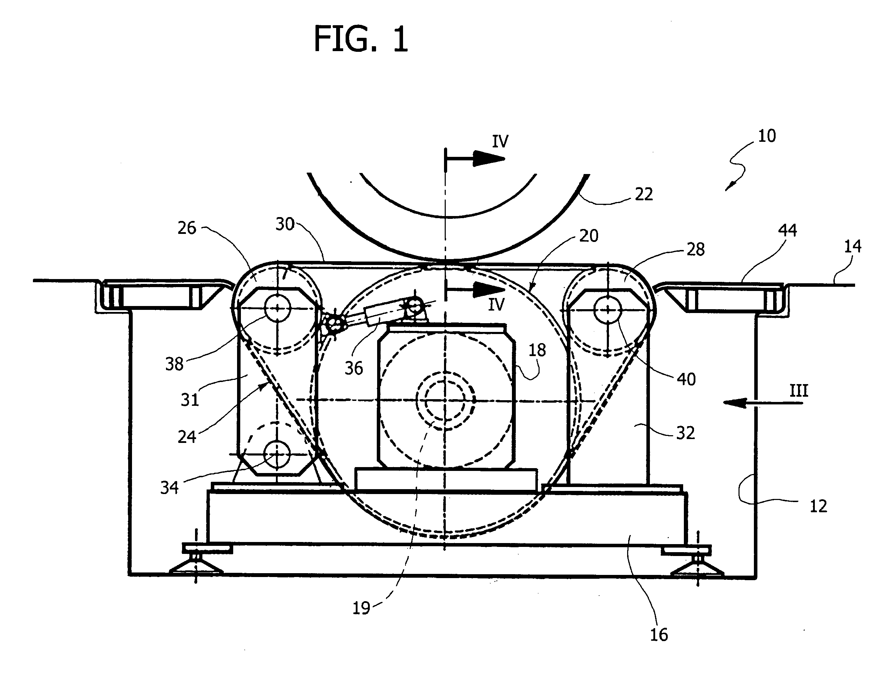

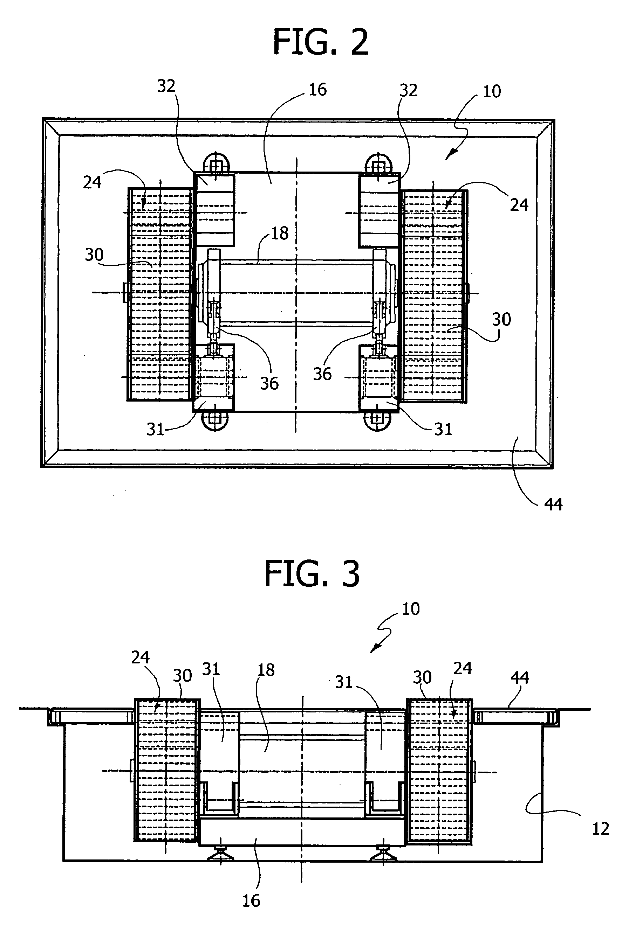

With reference to Figures 1 through 3, the reference number 10 designates a roller test bench according to the present invention. The test bench 10 is housed in a pit 12, lowered relative to a horizontal plane 14 whereon can roll the wheels of a vehicle being tested.

The test bench 10 comprises a stationary support structure 16 which bears on the bottom of the pit 12. The support structure 16 bears a brake 18 usually constituted by a rotating electrical machine controlled by an electronic apparatus capable of dosing and measuring the braking action. The brake 18 has an output shaft 19 (Figure 1) whereon is keyed at least one support roller 20 whereon acts a respective wheel 22 of a vehicle undergoing testing. In the example illustrated in the figures, the roller test bench 10 is of the type used to test four wheel vehicles and it is therefore provided with two support rollers 20, mutually coaxial and fastened on respective end portions of the output shaft 19 at opposite parts relative to the brake 18. If the roller test bench 10 is used to test motor vehicles, it will be provided with a single support roller 20.

In the remainder of the description, reference shall be made to a single support roller 20 and it is understood that what is described herein is also applied to the other roller in the case of two-roller test bench. The support roller 20 is mounted on an end portion of the output shaft 19. Preferably, the diameter of the support roller 20 is limited to no more than 1.25 times the outer diameter of the tyre of the wheel 22 of the vehicle being tested.

The roller test bench 10 according to the present invention comprises a flexible element closed in a loop 24 co-operating with the support roller 20. The flexible element 24 can be of various types, e.g.:
- rubberised belt closed in a loop provided with longitudinal trapezoidal ribs, such as the "POLY-V" belts by SIT S.p.A.;
- toothed drive belt with outer coating of chloroprene or other abrasion-resistant material, such as the "Super Torque" belts by SIT S.p.A.;
- flat belt for power transmissions;
- strip of welded stainless steel in closed loop, with less than 0.5 millimetre thickness.

The flexible element 24 co-operates with two transmission members and with the support roller 20. In the illustrated example, the transmission members are constituted by two idle pulleys 26, 28 rotatable around respective axes, parallel to the axis of rotation of the support roller 20. The transmission pulleys 26, 28 have lower diameter relative to the diameter of the support roller 20 and are arranged in such a way that the flexible element 24 has a planar upper segment 30 tangential to the support roller 20. The flexible element 24 has a lower segment wound on the support roller 20. The angle of winding of the flexible element 24 on the support roller 20 must be equal to or greater than about 15° to allow the transmission of power between the flexible element 24 and the support roller 20.

The upper segment 30 of the flexible element 24 in use is positioned between the wheel 22 of the vehicle under test and the support roller 20. The two transmission pulleys 26, 28 are placed in such a position as to maintain nearly horizontal the upper segment 30 of the flexible element 24 before and after the region of contact with the tyre 22. A small adjustment in height of one or both transmission pulleys 26, 28 (in the order of 1-5 mm relative to the point of tangency) can be provided, which allows to reduce the deformation of the tyre of the wheel 22 in the region of contact with the upper segment 30 of the flexible element 22.

The axes of rotation of the transmission pulleys 26, 28 are borne by respective uprights 31, 32. The upright 32 of the pulley 28 is fixed relative to the support structure 16 whilst the upright 31 of the pulley 26 is articulated to the support structure 16 around an axis 34 parallel to the axis of rotation of the pulley 26. The upright 31 is connected to a hydraulic or electromechanical actuator 36 which serves as a device for tensioning the flexible element 24. The actuator 36 allows to compensate the elongation of the flexible element 24 caused by the centrifugal force, which an be considerable at speeds exceeding 30 m/s.

The pit 12 is closed superiorly by a roof 44 provided with openings through which projects the horizontal segment 30 of the flexible element 24.

Preferably, the transmission pulleys 26, 28 and the support roller 20 are mounted in overhang on the respective shafts 38, 40 and 19. This arrangement is advantages because, after loosening the tensioning device 36, the flexible element 24 can be removed and reinstalled without having to dismount the supports of the shafts bearing the transmission pulleys 26, 28 and the support roller 20.

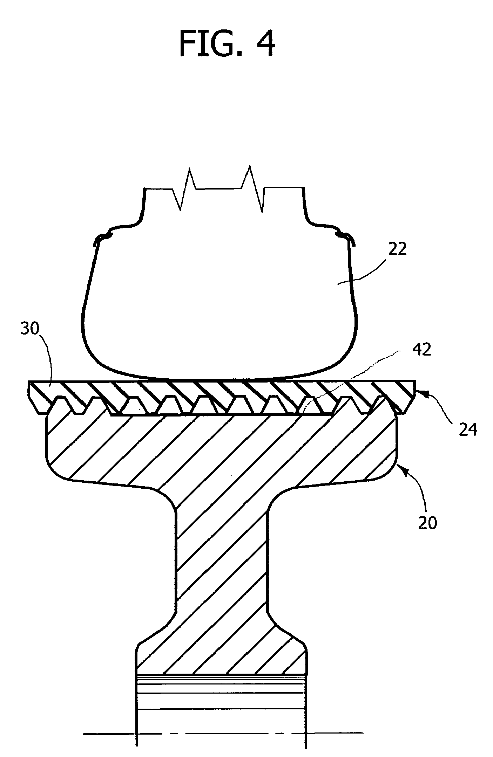

If the flexible element 24 is constituted by a belt with longitudinal trapezoidal ribs, the support roller 20 and the transmission pulleys 26, 28 are provided with grooves with triangular profile. Preferably, as shown in Figure 4, the support roller 20 is provided with a smooth central portion 42 whereon bear the ridges of the profiles of the belt 24, in order to reduce or eliminate the risk that the belt may be cut by the contact pressure exerted by the tyre of the wheel 22.

If the flexible element 24 is constituted by a toothed drive belt, the pulleys 26, 28 and the support roller 20 will be provided with corresponding teeth.

If the flexible element 24 is constituted by a flat belt or by a steel strip, the support roller 20 and the transmission pulleys 26, 28 will have flat surfaces. In this case, one of the pulleys 26, 28 can be provided with a motorised steering movement, controlled by an automatic adjustment system to contrast the lateral drift of the strip.

The roller test bench according to the invention can also be used to drive in rotation the wheels of a vehicle in aerodynamic tests in wind tunnels. In this case, the electric machine 18 is driving instead of braking.

The solution according to the present invention allows to reduce the depth of the pit 12 because it allows to use support rollers 20 with reduced diameter. The flexible element 24 allows to obtain an extended contact area with the tyre 22 even with a support roller 20 with reduced diameter. Therefore the problems caused by the need to provide very deep pits are avoided, and also avoided are excessive stresses to the tyres, caused by the use of small rollers.

## Claims

1. A roller test bench for vehicles on wheels, comprising at least one support roller (20) whereon acts a respective wheel (22) of a vehicle, **characterised in that** it comprises a flexible element closed in a loop (24) co-operating with the support roller (20) and with transmission members (26, 28), the flexible element (24) having a lower segment wound on the support roller (20) and an upper segment (30) that is planar and tangential to the support roller (20), said upper segment (30) in use being positioned between a wheel (22) of the vehicle being tested and the support roller (20).

2. Test bench as claimed in claim 1, **characterised in that** said transmission members are constituted by idle pulleys (26, 28) whose diameter is smaller than the diameter of the support roller (20).

3. Test bench as claimed in claim 2, **characterised in that** at least one of said transmission pulleys (26, 28) is associated to a tensioning device (36).

4. Test bench as claimed in claim 2, **characterised in that** at least one of said transmission pulleys (26, 28) is provided with an adjustment in the vertical direction.

5. Test bench as claimed in claim 2, **characterised in that** said support roller (20) and the idle pulleys (26, 28) are mounted on respective shafts in overhang.

6. Test bench as claimed in claim 1, **characterised in that** the flexible element 24 is constituted by a loop belt with longitudinal trapezoidal ribs co-operating with corresponding grooves with triangular profile of the support roller (20).

7. Test bench as claimed in claim 6, **characterised in that** the support roller (20) has a central area (42) without grooves, able to allow contact with the ridges of the profiles of the belt.

8. Test bench as claimed in claim 1, **characterised in that** the flexible element (24) is constituted by a positive drive belt co-operating with teeth of the support roller (20).

9. Test bench as claimed in claim 1, **characterised in that** the flexible element (24) is constituted by a flat belt for power transmissions.

10. Test bench as claimed in claim 1,
**characterised in that** the flexible element is constituted by a steel strip welded in a loop.
